Europäisches Patentamt

(19) European Patent Office

Office européen des brevets

(11) Veröffentlichungsnummer: **0 022 558**
B1

(12) # EUROPÄISCHE PATENTSCHRIFT

(45) Veröffentlichungstag der Patentschrift:
07.03.84

(51) Int. Cl.³: **H 04 L 25/03**, H 04 B 3/14

(21) Anmeldenummer: **80103933.0**

(22) Anmeldetag: **09.07.80**

(54) **Schaltungsanordnung zur Amplitudenregelung bei einer automatischen adaptiven, zeitlichen Entzerrung der Nachschwinger eines mindestens dreipegeligen Basisbandsignals.**

(30) Priorität: **13.07.79 DE 2928424**

(43) Veröffentlichungstag der Anmeldung:
**21.01.81 Patentblatt 81/3**

(45) Bekanntmachung des Hinweises auf die Patenterteilung:
**07.03.84 Patentblatt 84/10**

(84) Benannte Vertragsstaaten:
**AT BE NL SE**

(56) Entgegenhaltungen:
DE - A - 2 727 874
DE - B - 2 428 160
DE - B - 2 703 622
GB - A - 1 511 870

NACHRICHTENTECHNISCHE ZEITSCHRIFT, 23.
Jahrgang, Heft 8, August 1970, Berlin (West) K.
MÖHRMANN "Aufwandgünstige Realisierung eines
adaptiven Entzerrers für schnelle Datenübertragung",
Seiten 36-42

(73) Patentinhaber: **SIEMENS AKTIENGESELLSCHAFT,
Berlin und München Wittelsbacherplatz 2,
D-8000 München 2 (DE)**

(72) Erfinder: **Ludwig, Volker, Dipl.-Ing., Siedlungsstrasse 9,
D-8191 Gelting (DE)**

Schaltungsanordnung zur Amplitudenregelung bei einer automatischen adaptiven,
zeitlichen Entzerrung der Nachschwinger eines mindestens dreipegeligen Basisbandsignals

Die Erfindung bezieht sich auf eine Schaltungsanordnung zur Amplitudenregelung bei einer automatischen adaptiven, zeitlichen Entzerrung der Nachschwinger eines mindestens dreipegeligen Basisbandsignals, das über eine bespulte Leitung übertragen wird, mit einem Regelverstärker, dem das verzerrte Basisbandsignal zugeführt wird, mit einer Korrektursignaleinrichtung, die in Abhñgigkeit vom Fehler des entzerrten Basisbandsignals ein Korrektursignal erzeugt, und mit einem Summierer, der durch Addition des Korrektursignals und des vom Regelverstärker abgegebenen Signals das entzerrte Basisbandsignal erzeugt.

In der europäischen Patentanmeldung Nummer 0 004 054, veröffentlicht am 19.09.1979, ist eine Schaltungsanordnung zur automatischen Entzerrung eines Signals, das über eine Leitung mit Tiefpasscharakteristik übertragen wird, beschrieben. Diese Schaltungsanordnung weist einen Regelverstärker, dem das verzerrte Signal zugeführt wird, eine Korrektursignaleinrichtung, die in Abhängigkeit vom Fehler des entzerrten Signals ein Korrektursignal erzeugt, und einen Summierer auf, der durch Addition des Korrektursignals und des vom Regelverstärker abgegebenen Signals das entzerrte Signal erzeugt. Die Entzerrung des empfangenen Signals erfolgt hierbei im Frequenzbereich, während die Erfindung von einer Schaltungsanordnung zur zeitlichen Entzerrung ausgeht.

Bekanntlich werden Datensignale, insbesondere mehrpegelige Basisbandsignale verzerrt, wenn sie über Leitungen übertragen werden. Dabei ergeben sich im empfangenen Basisbandsignal zusätzlich zu den Hauptschwingern auch noch Nebenschwinger, die eine Auswertung des Basisbandsignals wesentlich erschweren können. Insbesondere dann, wenn das Basisbandsignal über eine bespulte Leitung, beispielsweise über ein Kabel übertragen wird, können Nachschwinger entstehen, deren Amplituden nahezu ebenso gross sind wie die Amplituden der Hauptschwinger und die eine Auswertung des Basisbandsignals in Frage stellen.

Der Erfindung liegt nun die Aufgabe zugrunde, eine Schaltunganordnung zur Amplitudenregelung bei einer automatischen adaptiven, zeitlichen Entzerrung der Nachschwinger anzugeben, mittels der ein mindestens dreipegeliges Basisbandsignal auch dann befriedigend entzerrt werden kann, wenn dieses Basisbandsignal über eine bespulte Leitung übertragen wird.

Die Lösung der der Erfindung zugrunde liegenden Aufgabe ist dadurch gekennzeichnet, dass eine Abtasthalteschaltungsanordnung vorgesehen ist, der das entzerrte Basisbandsignal zugeführt wird und deren Ausgangssignal nach Gleichrichtung in einem ersten Vergleicher mit einem ersten Sollwertsignal verglichen wird, dass das Ausgangssignal des ersten Vergleichers geglättet wird und ein geglättetes Signal entsteht, mit dem der Pegel des verzerrten Basisbandsignals mit Hilfe des Regelverstärkers geregelt wird.

Die erfindungsgemässe Schaltungsanordnung entzerrt über eine bespulte Leitung übertragene Basisbandsignale in befriedigender Weise, weil unter Verwendung der Abtasthalteschaltungsanordnung nur die Amplituden zu den Abtastzeitpunkten, nicht aber die dazwischen liegenden Amplituden bei der Entzerrung berücksichtigt werden. Dagegen ist eine Schaltungsanordnung, wie sie aus der DE-AS 24 28 160 bekannt ist, für die Entzerrung von über eine bespulte Leitung übertragenen Basisbandsignalen nicht geeignet. Bei dieser bekannten Schaltungsanordnung wird die zeitliche Entzerrung der empfangenen Basisbandsignale mit Hilfe eines Transversal-Entzerrungsfilters durchgeführt. Für diese Entzerrung werden dabei die Spitzenwerte des empfangenen Signals berücksichtigt. Für die im Rahmen der Entzerrung erforderliche Amplitudenregelung ist ein steuerbarer Signalverstärker vorgesehen. Diesem wird ein Steuersignal zugeführt, welches mit Hilfe eines Abtasters und eines Maximumpegeldetektors aus den Spitzenwerten des empfangenen Signals abgeleitet wird. Da jedoch, wie bereits oben erwähnt, bei der Übertragung von Basisbandsignalen über bespulte Leitungen Hauptschwinger und Nachschwinger mit gleichen Amplituden auftreten können, ist bei Verwendung der bekannten Schaltungsanordnung nicht sichergestellt, dass in jedem Falle zur Entzerrung der Basisbandsignale der die eigentliche Empfangsinformation darstellende Hauptschwinger herangezogen wird.

Ein weiterer Vorteil der erfindungsgemässen Schaltungsanordnung ist darin zu sehen, dass zur Glättung des Ausgangssignals der Abtasthalteschaltungsanordnung ein vergleichsweise geringer technischer Aufwand erforderlich ist, weil dieses Ausgangssignal rechteckförmig verläuft.

Um zu verhindern, dass bei Leitungsbruch durch die Korrektursignaleinrichtung ein ordnungsgemäss entzerrtes Basisbandsignal vorgetäuscht wird, ist es zweckmässig, dass in einem zweiten Vergleicher das vom Regelverstärker abgegebene Signal mit einem zweiten Sollwertsignal verglichen wird und dass der zweite Vergleicher ein Sperrsignal abgibt und damit den Pegel des Korrektursignals reduziert, falls der Spitzenwert des vom Regelverstärker abgegebenen Signals unter den Pegel des zweiten Sollwertsignals absinkt.

Wenn die Korrektursignaleinrichtung ein digitales Rechenwerk enthält, das mit Hilfe von Koeffizientengliedern das Korrektursignal erzeugt, dann ist es zweckmässig, dass mit Hilfe des Sperrsignals die Koeffizientenglieder verstellt werden.

Zur empfangsseitigen Gewinnung eines Taktsignals ist es zweckmässig, dass das entzerrte Basisbandsignal einer Schwellwertstufe zugeführt wird, die einen ersten bzw. zweiten Schwellwert festlegt und ein Schwellwertsignal abgibt, dessen Impulsflanken beim Überschreiten des ersten Schwellwertes bzw. beim Überschreiten des zweiten Schwellwertes entstehen, dass ein Taktgeber zur Erzeugung eines Taktsignals vorgesehen ist, dessen Phasenlage mit Hilfe des Schwellwertsignals geregelt wird und dass die Abtasthalteschaltungsanordnung mit dem Taktsignal gesteuert wird.

Im folgenden werden Ausführungsbeispiele der Erfindung anhand der Figuren 1 bis 3 beschrieben, wobei in mehreren Figuren dargestellte gleiche Gegenstände mit gleichen Bezugszeichen bezeichnet sind.

Es zeigen:

Fig. 1 ein Blockschaltbild einer Schaltungsanordnung zur adaptiven Entzerrung der Nachschwinger eines Basisbandsignals,

Fig. 2 einige Signale, die beim Betrieb der in Fig. 1 dargestellten Schaltungsanordnung auftreten und

Fig. 3 Signale, die im Zusammenhang mit der Taktgewinnung eine Rolle spielen.

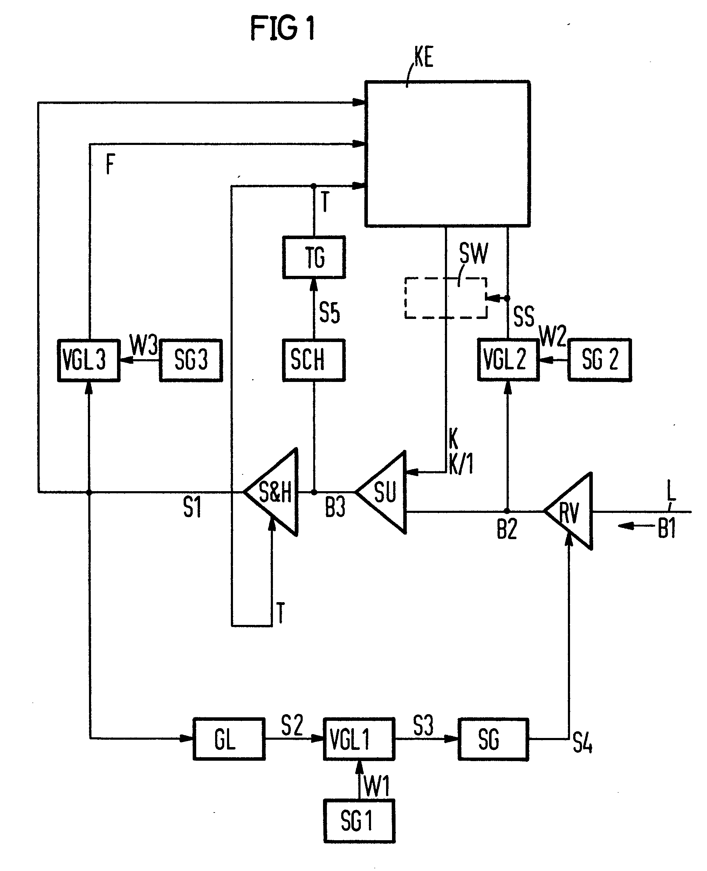

Fig. 1 zeigt eine Schaltungsanordnung zur automatischen, adaptiven, zeitlichen Entzerrung der Nachschwinger eines dreipegeligen Basisbandsignals. Dieses Basisbandsignal wird über die Leitung L übertragen, wobei das Basisbandsignal verzerrt wird. Es wird eine bespulte Leitung, beispielsweise eine mit Pupinspulen versehene Kabelstrecke vorausgesetzt.

Das empangene, verzerrte Basisbandsignal B1 wird dem Regelverstärker RV zugeführt. Mit Hilfe der Korrektursignaleinrichtung KE wird in Abhängigkeit vom Fehler des entzerrten Basisibandsignals B3 ein Korrektursignal K erzeugt. Mit Hilfe des Summierers SU werden das Korrektursignal K und das Ausgangssignal B2 des Regelverstärkers RV addiert, so dass sich das entzerrte Basisbandsignal B3 ergibt.

Zur Gewinnung eines Regelsignals ist die Abtasthalteschaltungseinrichtung S&H vorgesehen, der das entzerrte Basisbandsignal B3 zugeführt wird und deren Ausgangssignal S1 nach Gleichrichtung im Gleichrichter GL im Vergleicher VGL1 mit einem Sollwertsignal W1 verglichen wird. Mit dem Ausgangssignal S3 des Vergleichers VGL1 wird nach Glättung im Siebglied SG das Signal S4 gewonnen und der Pegel des verzerrten Basisbandsignals B1 mit Hilfe des Regelverstärkers RV geregelt.

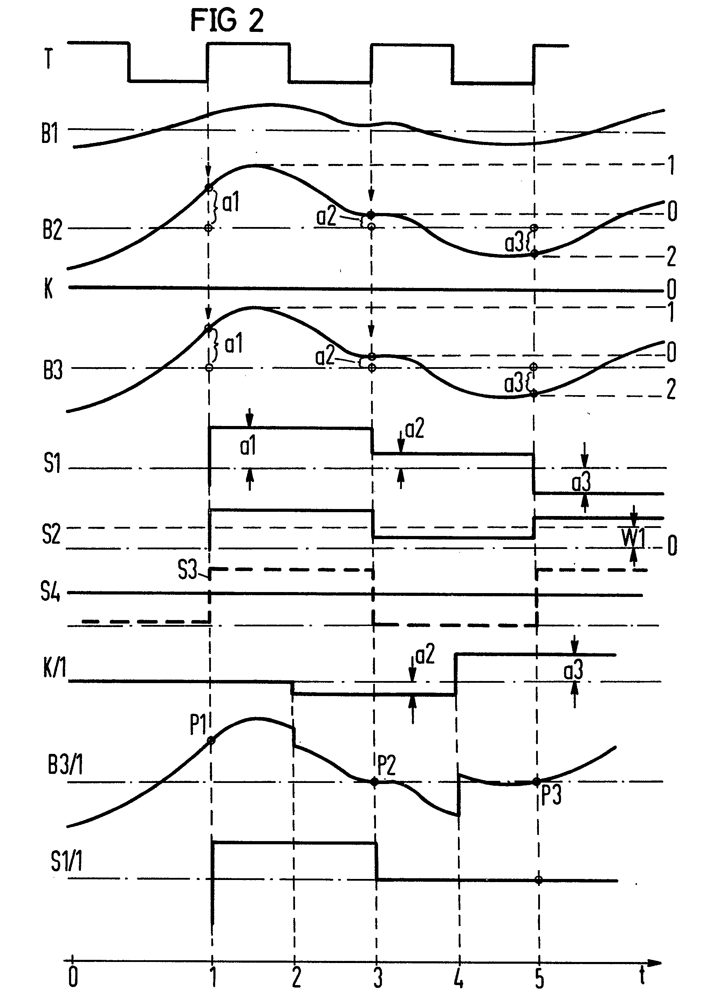

Im folgenden wird die Erzeugung dieses Regelsignals anhand der Fig. 2 genauer beschrieben. Mit dem Taktsignal T wird die Abtasthalteschaltungsanordnung S&H gesteuert. Das empfangene, verzerrte Basisbandsignal B1 wird dem Regelverstärker RV zugeführt. Der Verstärkungsfaktor des Regelverstärkers RV wird mit Hilfe des Regelsignals S4 geregelt. Dadurch ergibt sich am Ausgang des Regelverstärkers das verstärkte Basisbandsignal B2. Als Basisbandsignale B1, B2 werden pseudoternäre Signale vorausgesetzt. Insbesondere zeigt das verstärkte Basisbandsignal B2 deutlicher die Ternärwerte 0, 1, 2 des pseudoternären Signals.

Es wird zunächst ein Korrektursignal K angenommen, das durchwegs im Bereich der Nullinie verläuft. Der Summierer SU summiert die Signale K und B2, so dass sich unter den gemachten Annahmen das Signal B3 ergibt, das dem Signal B2 gleicht.
Die Abtasthalteschaltung S&H übernimmt zu den Zeitpunkten t = 1, t = 3, t = 5 die Amplituden a1 bzw. a2 bzw. a3 des Signals B3 und hält diese Amplituden während einer Periode des Taktsignals T fest. Dabei werden die Zeitpunkte t = 1, t = 3, t = 5 durch die positiven Impulsflanken des Taktsignals T festgelegt, mit welchen die Abtasthalteschaltungsanordnung S&H gesteuert wird. Dadurch ergibt sich das Signal S1.

Das Signal S1 wird mit Hilfe des Gleichrichters GL gleichgerichtet, so dass sich das Signal S2 ergibt. Im Vergleicher VGL1 wird das Signal S2 mit dem Sollwert W1 des Sollwertgebers SG1 verglichen und das Signal S3 abgegeben. Mit Hilfe des Siebgliedes SG wird das Signal S3 geglättet, wodurch sich das Signal S4 ergibt, das zur Regelung des Verstärkungsfaktors des Regelverstärkers RV dient. Falls die Signale S2 und W1 gleiche Amplitude haben, wird ein Regelsignal S4 abgegeben, das den Verstärkungsfaktor des Regelverstärkers RV nicht ändert. Falls die Amplitude des Signals S2 kleiner ist als die Amplitude des Signals W1, dann bewirkt das Regelsignal S4 eine Erhöhung des Verstärkungsfaktors und falls die Amplitude des Signals S2 grösser ist als die des Signals W1, dann bewirkt das Regelsignal S eine Verringerung des Verstärkungsfaktors des Regelverstärkers RV.

Der Sollwertgeber SG3 erzeugt das Sollwertsignal W3. Im Vergleicher VGL3 werden die Signale S1 und W3 miteinander verglichen und es wird das Fehlersignal F erzeugt. Mit dem Fehlersignal F, mit dem Taktsignal T und mit dem Signal S1 wird in der Korrektureinrichtung KE das nunmehr verbesserte Korrektursignal K/1 gewonnen. Bei diesem Ausführungsbeispiel wurde angenommen, dass das Korrektursignal K/1 ab dem Zeitpunkt t = 0 bis zum Zeitpunkt t = 2 im Bereich der strichpunktierten Nullinie verläuft. Damit wird signalisiert, dass die zum Zeitpunkt t = 1 auftretende Amplitude a1 des Basisbandsignals B2 nicht korrekturbedürftig ist. Im Gegensatz dazu hat das Korrektursignal K/1 ab dem Zeitpunkt t = 2 bis zum Zeitpunkt t = 4 eine Amplitude a2, deren Betrag gleich dem Betrag des Basisbandsignals B3 zum Zeitpunkt t = 3 ist. Die Amplituden der Signale B3 und K/1 zum Zeitpunkt t = 3 unterscheiden sich lediglich durch ihr verschiedenes Vorzeichen. Ähnlich ist es zum Zeitpunkt t = 5; die Amplituden a3 der Signale B3 und K/1 unterscheiden sich lediglich durch ihr verschiedenes Vorzeichen.

Der Summierer SU addiert die Signale B2 und K/1, wobei zwecks einfacherer Darstellung angenommen wird, dass sich das Signal B2 während der Gewinnung des Korrektursignals K/1 nicht verändert hat. Im Zuge dieser Addition entsteht das entzerrte Basisbandsignal B3/1. Dabei wurde im Punkt P1 keine Korrektur vorgenommen, weil zur Zeit t = 1 die Amplitude des Korrektursignals K/1 gleich Null ist. In den Punkten P2 bzw. P3 wurden jedoch Korrekturen vorgenommen, weil die Amplituden des Signals B2 zu den Zeitpunkten t = 3 und t = 5 gleich Null sein sollen. Da die Amplituden a2 bzw. a3 der Signale B3 und K/1 entgegengesetzt gerichtet sind, ergeben sich in den Punkten P2 und P3 die gewünschten Nulldurchgänge des entzerrten Basisbandsignals B3/1. Unter Verwendung dieses Basisbandsignals B3/1 wird mit Hilfe der Abtasthalteschaltungsanordnung S&H das Signal S1/1 gewonnen. Dieses Signal S1/1 wird in weiterer Folge zur Gewinnung der übertragenen Daten verwendet.

Die beschriebene Gewinnung des Regelsignals S4 zeichnet sich dadurch aus, dass das Basisbandsignal B3/1 genau zu den Abtastzeitpunkten t = 1 bzw. t = 3 bzw. t = 5 korrigiert wird, die durch positiven Impulsflanken des Taktsignals T signalisiert werden. Die Amplituden des Signals B3/1 werden also lediglich in den Punkten P1, P2, P3 korrigiert, aber nicht in den dazwischenliegenden Bereichen des Signals. Beispielsweise wird das Signal B3/1 zu den Zeitpunkten t = 2 und t = 4 nicht korrigiert; dies ist unerheblich, weil die Amplituden des Signals zu diesen Zeitpunkten ohnehin nicht benötigt werden. Andererseits ist es aber vorteilhaft, die Korrekturen auf jene Signalamplituden zu beschränken, die tatsächlich bei der Auswertung der Daten benötigt werden, weil diese benötigten Signalamplituden genauer als mit anderen Methoden korrigiert werden können. So wäre es beispielsweise denkbar, das Regelsignal S4 in Abhängigkeit vom Spitzenwert des entzerrten Signals B3 zu gewinnen. Bei dieser Art der Gewinnung des Regelsignals würden zwar die Signalanteile zwischen den Punkten P1, P2, P3 besser korrigiert, aber die Amplituden in den Punkten P1, P2, P3 schlechter korrigiert werden.

In vielen Fällen ist es zweckmässig, den Pegel des empfangenen Basisbandsignals B1 zu kontrollieren und beispielsweise Unterbrechungen der Leitung L umgehend berücksichtigen zu können. Falls die Pegel der Signale B1 und B2 im Störungsfalle extrem niedrig werden, dann liefert das Korrektursignal K/1 die wesentlichen Beiträge bei der Addition und es wäre denkbar, dass ein Regelsignal S4 gewonnen wird, das zwar einerseits den Verstärkungsfaktor des Regelverstärkers RV erhöht, aber andererseits nicht erkennen lässt, dass es sich hier um einen Störungsfall handelt. Es wäre auch der Fall denkbar, dass insbesondere bei Beginn einer Datenübertragung ein Korrektursignal K/1 mit zu grossen Amplituden am Summierer SU anliegt, so dass das Regelsignal S4 eine Verringerung des Vertärkungsfaktors des Regelverstärkers RV bewirkt, obwohl der Pegel des empfangenen Basisbandsignals B1 klein ist. Falls derartige Fälle nicht ausgeschlossen werden können, ist es zweckmässig, den zu niedrigen Pegel des Signals B2 zu signalisieren, um damit in weiterer Folge den Pegel des Korrektursignals K herabzusetzen. Bei vorliegendem Ausführungsbeispiel wird mit dem Sollwertgeber SG2 ein Sollwertsignal W2 erzeugt und im Vergleiches VGL2 werden die Spitzenwerte der beiden Signale B2 und W2 miteinander verglichen. Falls der Spitzenwert des Signals B2 unter den Pegel des Sollwertsignals W2 absinkt, gibt der Vergleicher VGL2 das Sperrsignal SS ab, mit Hilfe dessen die Amplituden des Korrekturesignal K/1 reduziert werden. Grundsätzlich wäre es denkbar, mit diesem Sperrsignal die leitende Verbindung der Korrektursignaleinrichtungen KE zum Summierer SU mit Hilfe einer Schaltstufe SW zu unterbrechen. Das Regelsignal S4 würde dann nur unter Berücksichtigung der Basisbandsignale B1 bzw. B2 gewonnen. Bei zu kleinem Pegel des empfangenen Basisbandsignnals B1 würde dann der Verstärkungsfaktor des Regelverstärkers RV erhöht werden, der Vergleicher VGL2 würde auf diese Pegelerhöhung ansprechen und das Sperrsignal SS würde die Sperre des Korrektursignals K/1 aufheben. Es wäre aber auch denkbar, dass bei zu kleinem Pegel des Signals B2 mit dem Sperrsignal SS Koeffizientenglieder beeinflusst werden, die möglicherweise in der Korrektureinrichtung KE vorhanden sind und die zur digitalen Erzeugung des Korrektursignals K/1 dienen.

Anhand der Beschreibung der Figuren 1 und 2 wurde das Taktsignal T als an sich vorhanden angesehen. Viele bekannte Verfahren beziehen sich auf die Gewinnung eines derartigen Taktsignals T, auf die aber nicht eingegangen wird, weil sie ausser dem Rahmen der vorliegenden Erfindung liegen. Insbesondere sind Verfahren bekannt, wonach das Taktsignal T aus dem entzerrten Signal B3 gewonnen werden kann. Dazu kann unter den Voraussetzungen der vorliegenden Erfindung eine Schwellwertstufe SCH vorgesehen sein, mit Hilfe der ein erster bzw. zweiter Schwellwert festgelegt wird und die das Schwellwertsignal S5 abgibt.

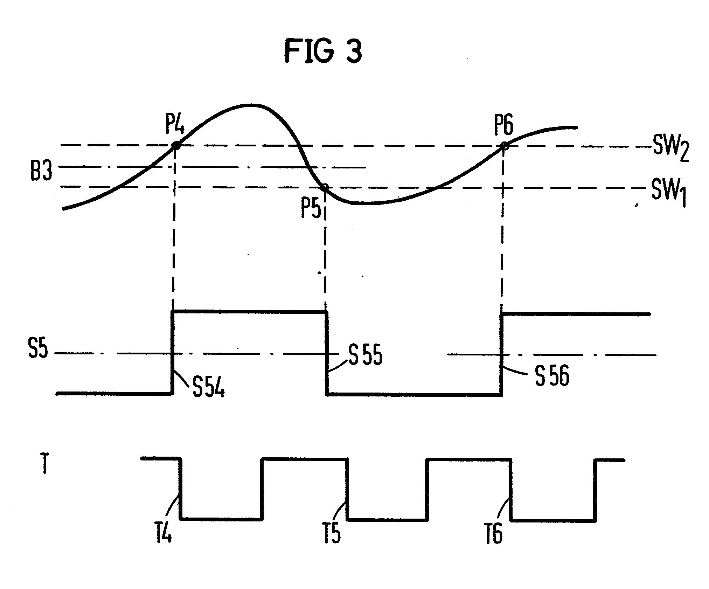

Fig. 3 zeigt die Wirkungsweise der in Fig. 1 dargestellten Schwellwertstufe SCH. Diese Schwellwertstufe spricht auf die beiden Schwellwerte SW1 bzw. SW2 des entzerrten Basisbandsignals B3 an und liefert das Schwellwertsignal S5. Dabei wird in Punkt P4 der Schwellwert SW2 überschritten und es entsteht eine positive Impulsflanke des Schwellwertsignals S5. Danach bleibt die Amplitude des Schwellwertsignals S5 konstant, bis das Signal B3 den anderen Schwellwert SW1 überschreitet. Dies geschieht im Punkt P5, wo eine negative Impulsflanke des Schwellwertsignals S5 entsteht. Die nächste positive Impulsflanke des Schwellwertsignals S5 entsteht in dem Augenblick, in dem das Signal B3 im Punkt P6 wieder den Schwellwert SW2 überschreitet. Das Schwellwertsignal S5 wird einem an sich bekannten Taktgenerator TG zugeführt, der das Taktsignal T erzeugt. Dabei sollen die zeitlichen Abstände der Impulsflanken S54, S55, S56 im Mittel gleich der Periodendauer des Taktsignals T sein. Ausserdem sollen die Flanken S54 bzw. S55 bzw. S56 im Mittel etwas früher auftreten als die entsprechenden Flanken T4 bzw. T5 bzw. T6 des Taktsignals T. Bei einem bevorzugten Ausführungsbeispiel treten die Flanken S54 bzw. S55 bzw. S56 des Signals S5 im Mittel um 1/6 der Periodendauer des Taktsignals T früher auf als die entsprechenden Flanken T4 bzw. T5 bzw. T6.

**Patentansprüche**

1. Schaltungsanordnung zur Amplitudenregelung bei einer automatischen adaptiven, zeitlichen Entzerrung der Nachschwinger eines mindestens dreipegeligen Basisbandsignals, das über eine bespulte Leitung (L) übertragen wird, mit einem Regelverstärker (RV), dem das verzerrte Basisbandsignal (B1) zugeführt wird, mit einer Korrektursignaleinrichtung (KE), die in Abhängigkeit vom Fehler des entzerrten Basisbandsignals ein Korrektursignal (K) erzeugt, und mit einem Summierer (SU), der durch Addition des Korrektursignals und des vom Regelverstärker abgegebenen Signals das entzerrte Basisbandsignal (B3) erzeugt, dadurch gekennzeichnet, dass eine Abtasthalteschaltungsanordnung (S&H) vorgesehen ist, der das entzerrte Basisbandsignal (B3) zugeführt wird und deren Ausgangssignal (S1) nach Gleichrichtung in einem ersten Vergleicher (VGL1) mit einem ersten Sollwertsignal W1) verglichen wird, dass das Ausgangssignal (S3) des ersten Vergleichers (VGL1) geglättet wird und dass ein geglättetes Signal (S4) entsteht, mit dem der Pegel des verzerrten Basisbandsignals (B1) mit Hilfe des Regelverstärkers (RV) geregelt wird (Fig. 1).

2. Schaltungsanordnung nach Anspruch 1, dadurch gekennzeichnet, dass in einem zweiten Vergleicher (VGL2) das vom Regelverstärker (RV) abgegebene Signal (B2) mit einem zweiten Sollwertsignal (W2) verglichen wird und dass der zweite Vergleicher (VGL2) ein Sperrsignal (SS) abgibt und damit den Pegel des Korrektursignals (K/1) reduziert, falls der Spitzenwert des vom Regelverstärker abgegebenen Signals (B2) unter den Pegel des zweiten Sollwertsignals (W2) absinkt (Fig. 1).

3. Schaltungsanordnung nach Anspruch 2, dadurch gekennzeichnet, dass die Korrektursignaleinrichtung (KE) ein digitales Rechenwerk enthält, welches mit Hilfe von Koeffizientengliedern das Korrektursignal (K) erzeugt, und dass mit Hilfe des Sperrsignals (SS) die Koeffizientenglieder verstellt werden (Fig. 1).

4. Schaltungsanordnung nach einem der Ansprüche 1 bis 3, dadurch gekennzeichnet, dass das entzerrte Basisbandsignal (B3) einer Schwellwertstufe (SCH) zugeführt wird, die einen ersten bzw. zweiten Schwellwert (SW1, SW2) festlegt und ein Schwellwertsignal (S5) abgibt, dessen Impulsflanken (S54, S55, S56) beim Überschreiten des ersten Schwellwertes (SW1) bzw. beim Überschreiten des zweiten Schwellwertes (SW2) entstehen, dass ein Taktgeber (TG) zur Erzeugung eines Taktsignals (T) vorgesehen ist, dessen Phasenlage mit Hilfe des Schwellwertsignals (S5) geregelt wird, und dass die Abtasthalteschaltungsanordnung (S&H) mit dem Taktsignal (T) gesteuert wird (Fig. 1 und 3).

5. Schaltungsanordnung nach Anspruch 4, dadurch gekennzeichnet, dass die Impulsflanken (S54, S55, S56) des Schwellwertsignals (S5) im Mittel etwas früher — vorzugsweise um 1/6 der Periodendauer des Taktsignals (T) früher — als die entsprechenden Flanken (T4 bzw. T5 bzw. T6) des Taktsignals (T) auftreten (Fig. 3).

## Claims

1. Circuit arrangement for the amplitude regulation in an automatic adaptive time-wise equalisation of the post-oscillations of a base band signal which has at least three levels and which is transmitted via a loaded line (L), having a control amplifier (RV), to which the distorted base band signal (B1) is supplied, having a correction signal device (KE) which produces a correction signal (K) in dependence upon the error of the equalised base band signal, and having a summer (SU) which produces the equalised base band signal (B3) by adding the correction signal and the signal emitted by the control amplifier, characterised in that there is provided a sample holding circuit arrangement (S&H), to which the equalised base band signal (B3) is fed and whose output signal (S1) is compared after rectification with a first reference value signal (W1) in a first comparator (VGL1), that the output signal (S3) of the first comparator (VGL1) is smoothed, and that a smoothed signal (S4) is produced by means of which the level of the distorted base band signal (B1) is regulated with the aid of the control amplifier (RV) (Fig. 1).

2. Circuit arrangement as claimed in claim 1, characterised in that in a second comparator (VGL2), the signal (B2) emitted by the control amplifier (RV) is compared with a second reference value signal (W2), and that the second comparator (VGL2) emits an inhibiting signal (SS) and thereby reduces the level of the correction signal (K/1) if the peak value of the signal (B2) emitted by the control amplifier drops below the level of the second reference value signal (W2), (Fig. 1).

3. Circuit arrangement as claimed in claim 2, characterised in that the correction signal device (KE) includes a digital computer unit, which produces the correction signal (K) with the aid of coefficient elements, and the coefficient elements are adjusted with the aid of the inhibiting signal (SS), (Fig. 1).

4. Circuit arrangement as claimed in one of claims 1 to 3, characterised in that the equalised base band signal (B3) is fed to a threshold value stage (SCH) which determines a first or a second threshold value (SW1, SW2), as the case may be, and emits a threshold value signal (S5), whose pulse flanks (S54, S55, S56) are formed when the first threshold value (SW1) is exceeded or when the second threshold value (SW2) is exceeded, as the case may be, that there is provided a clock pulse generator (TG) which serves to produce a clock pulse signal (T) and whose phase position is controlled with the aid of the threshold value signal (S5), and that the sample holding circuit arrangement (S&H) is controlled by means of the clock pulse signal (T), (Fig. 1 and 3).

5. Circuit arrangement as claimed in claim 4, characterised in that on average the pulse flanks (S54, S55, S56) of the threshold value signal (S5) occur somewhat earlier — preferably by 1/6 of the period of the clock pulse signal (T) — than the corresponding flanks (T4 and T5 and T6) of the clock pulse signal (T), (Fig. 3).

## Revendications

1. Dispositif pour le réglage de l'amplitude lors de la correction automatique, adaptative et temporelle des oscillations parasites d'un signal de bande de base à au moins trois niveaux et qui est transmis par l'intermédiaire d'une ligne (L) à laquelle est associée une bobine, avec un amplificateur de réglage (RV), auquel est appliqué le signal de bande de base déformé (B1), avec un dispositif à signal de correction (KE) qui produit, en fonction de l'erreur du signal de bande de base corrigée, un signal de correction (K), et avec un totalisateur (SU) qui, par addition du signal de correction et du signal émis par l'amplificateur de réglage, produit le signal de bande de base corrigé (B3), caractérisé par le fait qu'il est prévu un dispositif de retenue de l'échantillonage, auquel est appliqué le signal de bande corrigé (B3) et dont le signal de sortie (S1) est comparé, après redressement, dans un premier comparateur (VGL1), avec un premier signal de valeur de consigne (W1), que le signal de sortie (S3) du premier comparateur (VGL1) est lissé et qu'un signal lissé (S4) est formé à l'aide duquel est réglé, au moyen de l'amplificateur de réglage (RV), le niveau du signal de bande de base déformé (B1) (figure 1).

2. Dispositif selon la revendication 1, caractérisé par le fait que dans un second comparateur (VGL2) on compare le signal (B2) fourni par l'amplificateur de réglage (RV) avec un second signal de valeur de consigne (W2), et que le second comparateur (VGL2) émet un signal de blocage (SS) et réduit de ce fait le niveau du signal de correction (K/1) si la valeur de pointe du signal (B2) qui est émis par l'amplificateur de réglage chute en-dessous du niveau du second signal de valeur de consigne (W2) (figure 1).

3. Dispositif selon la revendication 2, caractérisé par le fait que le dispositif à signal de correction (KE) comporte une unité de calcul numérique qui produit, à l'aide d'éléments de coefficients, le signal de correction (K), et qu'à l'aide du signal de blocage (SS) les dispositifs à coefficients sont ajustés (figure 1).

4. Dispositifs selon l'une des revendications 1 à 3, caractérisé par le fait que le signal de bande de base (B3) corrigé est appliqué à un étage à valeur de seuil (SCH) qui détermine une première et une seconde valeurs de seuil (SW1, SW2) et qui émet un signal de valeur de seuil (S5) dont les flancs des impulsions (S54, S55, S56) sont formés lors du dépassement de la première valeur de seuil (SW1) ou lors du dépassement de la seconde valeur de seuil (SW2), qu'un générateur de cadence (TG) est prévu pour produire un signal de cadence (T) dont la position de phase est réglée à l'aide du signal de valeur de seuil (S5) et que le dispositifs de retenue de l'échantillonnage (S&H) est commandé à l'aide du signal de cadence (T) (figures 1 et 3).

5. Dispositif selon la revendication 4, caractérisé par le fait que les flancs des impulsions (S54, S55, S56) du signal de valeur de seuil (S5) apparaissent en moyenne à peu près plutôt — de préférence de 1/6 de la durée de la période du signal de cadence (T) — que les flancs correspondants (T4 ou T5 ou T6) du signal de cadence (T) (figure 3).

# FIG 1

# FIG 2

# FIG 3